# EUROPEAN PATENT APPLICATION

(11) **EP 4 607 539 A1**
(43) Date of publication of application: **27.08.2025**
(21) Application number: 23879688.2
(22) Date of filing: 11.10.2023
(51) Int. Cl.: H01B 1/10, H01B 1/06, H01B 13/00

(54) **SULFIDE SOLID ELECTROLYTE AND METHOD FOR PRODUCING SAME, ELECTRODE MIXTURE, SOLID ELECTROLYTE LAYER, AND ALL-SOLID-STATE LITHIUM ION SECONDARY BATTERY**

(30) Priority: 21.10.2022 JP 2022169459
(71) Applicant: AGC INC., Chiyoda-ku, Tokyo 1008405 (JP)
(72) Inventor: MIYAKE, Jinsuke, Tokyo 100-8405 (JP); AKATSUKA, Kosho, Tokyo 100-8405 (JP); FUJII, Naoki, Tokyo 100-8405 (JP); FUKUMINE, Mayumi, Tokyo 100-8405 (JP)
(74) Representative: Müller-Boré & Partner Patentanwälte PartG mbB
(86) International application number: PCT/JP2023/036940
(87) International publication number: WO 2024/085045

(57) **Abstract**

The present invention pertains to a sulfide solid electrolyte that contains Li, P, S, and Ha, and that has an argyrodite-type crystal structure. The crystal structure has a plurality of PS₄ tetrahedrons T1 in which a part of elements is optionally substituted. In the sulfide solid electrolyte, 16 elements that serve as apexes of the PS4 tetrahedrons T1 exist in a unit lattice, and the average value of the distance Δ, obtained by making said elements correspond to the S element positions at 16e sites of a PS4 tetrahedron T2 of a space group F-43m, is 0.05-0.30 Å.

## Description

### TECHNICAL FIELD

The present invention relates to a sulfide solid electrolyte and a method for producing the same. The present invention also relates to an electrode mixture, a solid electrolyte layer, and an all-solid-state lithium ion secondary battery containing the sulfide solid electrolyte.

### BACKGROUND ART

Lithium ion secondary batteries are widely used for a portable electronic device such as a mobile phone and a notebook computer.

In related art, a liquid electrolyte has been used in a lithium ion secondary battery, but there is a concern of liquid leakage, ignition, and the like, and it has been necessary to increase the size of a case for safety design. It has also been desired to improve the shortage of battery life and the narrow operating temperature range.

In contrast, attention has been paid to an all-solid-state lithium ion secondary battery in which a solid electrolyte is used as an electrolyte of a lithium ion secondary battery, from the viewpoint of improving safety, charge and discharge at a high speed, and reducing the size of a case.

The solid electrolytes are roughly classified into sulfide solid electrolytes and oxide solid electrolytes. Sulfide ions constituting the sulfide solid electrolytes have higher polarizability and higher ion conductivity than those of oxide ions constituting the oxide solid electrolytes. As the sulfide solid electrolytes, there has been known LGPS crystals such as Li₁₀GeP₂S₁₂, argyrodite crystals such as Li₆PS₅Cl, LPS crystallized glass such as Li₇P₃S₁₁ crystallized glass, and the like.

Patent Literature 1 discloses an argyrodite sulfide solid electrolyte. The sulfide solid electrolyte disclosed in Patent Literature 1 has a cubic structure belonging to a space group F-43m, and contains a compound represented by a composition formula: Li₇₋ₓPS₆₋ₓHaₓ (where Ha represents Cl or Br) (where x = 0.2 to 1.8), and a lightness L value of an L* a* b* color system is 60.0 or more. This is intended to improve the charge and discharge efficiency and the cycle characteristics by increasing the lithium ion conductivity and decreasing the electron conductivity.

### CITATION LIST

### PATENT LITERATURE

Patent Literature 1: WO2015/012042

### SUMMARY OF INVENTION

### TECHNICAL PROBLEM

On the other hand, there is a demand for further improvement in lithium ion conductivity of the sulfide solid electrolytes.

Therefore, an object of the present invention is to provide a novel sulfide solid electrolyte having an improved lithium ion conductivity and a method for producing the same. Another object of the present invention is to provide an electrode mixture, a solid electrolyte layer, and an all-solid-state lithium ion secondary battery containing the sulfide solid electrolyte.

### SOLUTION TO PROBLEM

As a result of intensive studies, the present inventors have found that the above problems can be solved by introducing a structural distortion into a PS₄ tetrahedron in a related-art argyrodite crystal structure belonging to a space group F-43m, and have completed the present invention.

That is, the present invention relates to the following [1] to [13].
[1] A sulfide solid electrolyte including: a Li element; a P element; a S element; and
   a Ha element,
   in which the sulfide solid electrolyte has an argyrodite crystal structure,
   the Ha element is at least one element selected from the group consisting of F, Cl, Br, and I,
   the crystal structure includes a plurality of PS₄ tetrahedrons T₁ with the P element at a center and four S elements at vertices,
   in a part of the PS₄ tetrahedrons T₁, the P element may be substituted with at least one element selected from the group consisting of a Si element, an Al element, a Sn element, an In element, a Cu element, a Sb element, and a Ge element,
   in a part of the PS₄ tetrahedrons T₁, at least a part of the S elements may be substituted with at least one element selected from the group consisting of an O element and the Ha element,
   the crystal structure includes 16 elements serving as the vertices of the PS₄ tetrahedrons T₁ in a unit cell, and
   when the 16 elements are made to correspond to 16 S elements constituting vertices corresponding to 16e sites of PS₄ tetrahedrons T₂ in a space group F-43m, an average value of a distance Δ between respective positions of the 16 elements in the PS₄ tetrahedrons T₁ and respective positions of the 16 S elements in the PS₄ tetrahedrons T₂ corresponding thereto is 0.05 Å to 0.30 Å.
[2] The sulfide solid electrolyte according to [1],
   in which in the part of the PS₄ tetrahedrons T₁, the P element is substituted with the Si element.
[3] The sulfide solid electrolyte according to [1] or [2],
   in which in the part of the PS₄ tetrahedrons T₁, the at least a part of the S elements is substituted with the O element.
[4] The sulfide solid electrolyte according to any one of [1] to [3], including at least two elements selected from the group consisting of F, Cl, Br and I as the Ha element.
[5] The sulfide solid electrolyte according to any one of [1] to [4],
   in which the average value of the distance Δ is 0.05 Å to 0.20 Å.
[6] The sulfide solid electrolyte according to any one of [1] to [5],
   in which the unit cell is a space group P1 with axial lengths being a = b = c = 9.70Å to 10.45 Å and axial angles being α = β = γ = 90°.
[7] An electrode mixture to be used in a lithium ion secondary battery, the electrode mixture including: the sulfide solid electrolyte according to any one of [1] to [6]; and an active material.
[8] A solid electrolyte layer to be used in a lithium ion secondary battery, the solid electrolyte layer including the sulfide solid electrolyte according to any one of [1] to [6].
[9] An all-solid-state lithium ion secondary battery including the sulfide solid electrolyte according to any one of [1] to [6].
[10] A method for producing a sulfide solid electrolyte, the method including:
   mixing raw materials containing a Li element, a P element, a S element, and a Ha element to obtain a raw material mixture;
   heating the raw material mixture at a temperature of 760°C or higher to obtain a melt of a completely dissolved intermediate compound;
   cooling the melt to precipitate an argyrodite crystal; and
   heat-treating the precipitated crystal at 350°C to 500°C,
   in which the Ha element is at least one element selected from the group consisting of F, Cl, Br, and I, and
   the sulfide solid electrolyte contains an argyrodite crystal structure.
[11] The method for producing a sulfide solid electrolyte according to [10], in which the raw materials further contain at least one element selected from the group consisting of a Si element, an Al element, a Sn element, an In element, a Cu element, a Sb element, a Ge element, and an O element.
[12] The method for producing a sulfide solid electrolyte according to [10] or [11], in which the heating at the temperature of 760°C or higher is performed under a condition of 10 minutes to 10 hours in an inert atmosphere.
[13] The method for producing a sulfide solid electrolyte according to any one of [10] to [12], in which the heat-treating is performed in an inert atmosphere for 10 minutes to 10 hours.

### ADVANTAGEOUS EFFECTS OF INVENTION

According to the present invention, a novel sulfide solid electrolyte having an improved lithium ion conductivity can be obtained. Therefore, a lithium ion secondary battery using an electrode mixture or a solid electrolyte layer containing the above-described sulfide solid electrolyte has excellent output characteristics and low-temperature characteristics. An all-solid-state lithium ion secondary battery having such excellent characteristics is obtained.

### BRIEF DESCRIPTION OF DRAWINGS

FIG. 1 is a diagram illustrating PS₄ tetrahedrons T₁ present in a unit cell and a state of a part thereof in a crystal structure of a sulfide solid electrolyte according to the present embodiment.
FIG. 2 is a diagram illustrating the PS₄ tetrahedrons T₁ present in the unit cell, a state of a part thereof and other elements in the crystal structure of the sulfide solid electrolyte according to the present embodiment.
FIGS. 3A and 3B are diagrams illustrating a method for obtaining an average value of a distance Δ in the present embodiment. FIG. 3A is a diagram illustrating one of PS₄ tetrahedrons T₂ present in a unit cell in a space group F-43m, and FIG. 3B is a diagram illustrating one of the PS₄ tetrahedrons T₁ present in the unit cell of the crystal structure in the present embodiment.
FIG. 4 is a flow diagram illustrating a method for producing a sulfide solid electrolyte according to the present embodiment.
FIG. 5 is a graph illustrating the result of PDF analysis of a sulfide solid electrolyte in Example 1.

### DESCRIPTION OF EMBODIMENTS

Hereinafter, the present invention is described in detail, but the present invention is not limited to the following embodiment and can be freely modified and implemented without departing from the gist of the present invention. The symbol "-" or the word "to" that is used to express a numerical range includes the numerical values before and after the symbol or the word as the upper limit and the lower limit of the range, respectively.

### <Sulfide Solid Electrolyte>

A sulfide solid electrolyte according to the present embodiment (hereinafter, may be simply referred to as a "solid electrolyte") contains a Li element, a P element, a S element, and a Ha element, and has an argyrodite crystal structure. Here, the Ha element in the present description is at least one element selected from the group consisting of F, Cl, Br, and I.

The crystal structure of the sulfide solid electrolyte according to the present embodiment includes a plurality of PS₄ tetrahedrons T₁ with the P element at a center and four S elements at vertices. Among them, in a part of the PS₄ tetrahedrons T₁, the P element may be substituted with at least one element selected from the group consisting of a Si element, an Al element, a Sn element, an In element, a Cu element, a Sb element, and a Ge element. In a part the PS₄ tetrahedrons T₁, at least a part of the S elements may be substituted with at least one element selected from the group consisting of an O element and the Ha element.

In the crystal structure of the sulfide solid electrolyte according to the present embodiment, 16 elements serving as the vertices of the PS₄ tetrahedrons T₁ are present in a unit cell. When the 16 elements are made to correspond to 16 S elements constituting vertices of PS₄ tetrahedrons T₂ in a space group F-43m, an average value of a distance Δ between respective positions of the 16 elements in the PS₄ tetrahedrons T₁ and respective positions of the 16 S elements in the PS₄ tetrahedrons T₂ corresponding thereto is 0.05 Å to 0.30 Å. The vertices of the PS₄ tetrahedrons T₂ in the space group F-43m corresponds to 16e sites.

The larger the average value of the distance Δ, the more distorted the structure of the PS₄ tetrahedron T₁ in the crystal structure of the sulfide solid electrolyte is, compared with a PS₄ tetrahedron in a related-art argyrodite crystal structure belonging to the space group F-43m.

In the sulfide solid electrolyte according to the present embodiment, the average value of the distance Δ is 0.05 Å to 0.30 Å, and it is found that a lithium ion conductivity of the sulfide solid electrolyte is improved by introducing a structural distortion within the above range.

The structural distortion is described below.

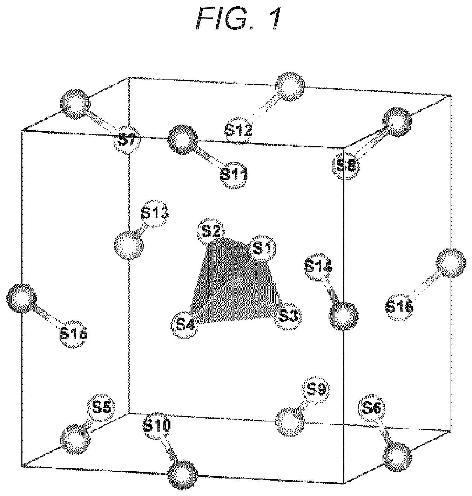

In the crystal structure of the sulfide solid electrolyte according to the present embodiment, a state of the PS₄ tetrahedrons T₁ present in the unit cell is illustrated in FIGS. 1 and 2, and 16 elements serving as the vertices of the PS₄ tetrahedrons T₁ are present in the unit cell.

FIG. 1 is a diagram illustrating the PS₄ tetrahedrons T₁ present in the unit cell and a state of a part thereof, and illustrates only the P elements and the S elements. The elements denoted by reference signs S1 to S16 represent the S elements serving as the vertices. Other elements without a sign are the P elements.

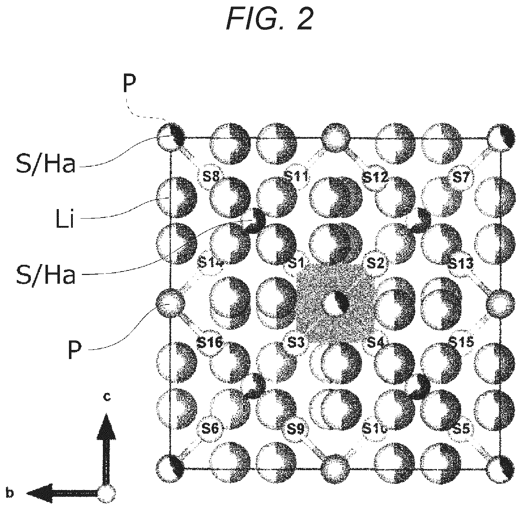

FIG. 2 is a diagram illustrating the PS₄ tetrahedrons T₁ present in the unit cell and a state of a part thereof and other elements, and is a diagram illustrating a state of a Li element and a Ha element in addition to the P element and the S element when viewed from an a-axis direction. The PS₄ tetrahedron T₁ is composed of the P element at a 4b site and the S elements at 16e sites, and the Li element at a 48h site and a S element/Ha element at a 4a site are present between the adjacent PS₄ tetrahedrons T₁.

Among the S elements indicated by S1 to S16 in FIGS. 1 and 2, four S elements indicated by S1 to S4 are vertices constituting one PS₄ tetrahedron T₁. The other 12 S elements S5 to S16 are vertices constituting 12 different PS₄ tetrahedrons T₁.

When the elements S1 to S16 serving as the 16 vertices in the present embodiment are made to correspond to elements S'1 to S'16 serving as 16 vertices (corresponding to 16e sites) constituting the PS₄ tetrahedrons T₂ in the space group F-43m, the average value of the distance Δ between respective positions of the elements serving as the 16 vertices of the PS₄ tetrahedrons T₁ and respective positions of the elements serving as the 16 vertices of the PS₄ tetrahedrons T₂ corresponding thereto is 0.05 Å to 0.30 Å. That is, a distance Δ1 between S1 and S'1, a distance Δ2 between S2 and S'2, and so on up to a distance Δ16 between S16 and S'16 are determined, and the distance Δ which is an average value of Δ1 to Δ16 is 0.05 Å to 0.30 Å.

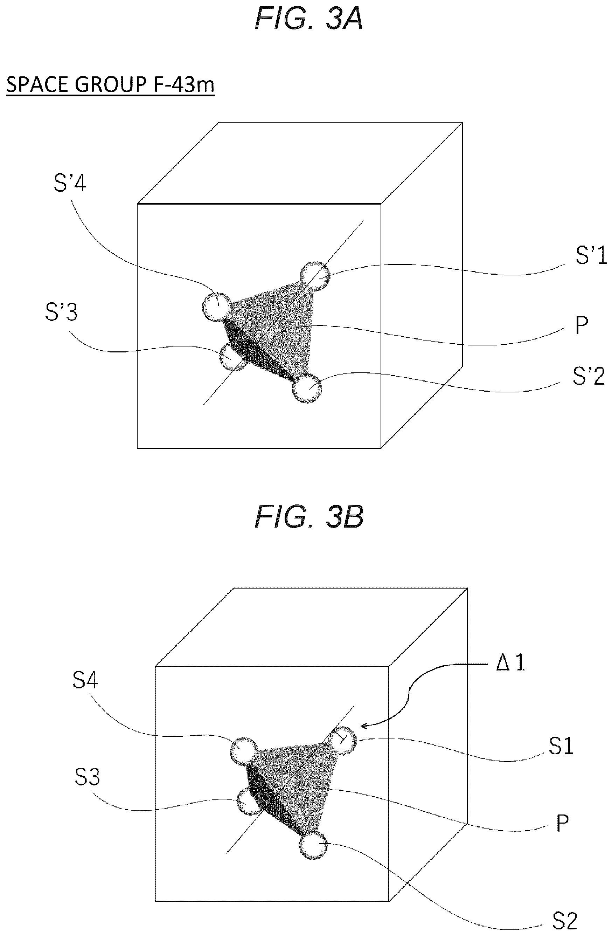

A method for obtaining the average value of the distance Δ is described with reference to FIGS. 3A and 3B.

FIG. 3A is a diagram illustrating one of the PS₄ tetrahedrons T₂ present in the unit cell in the space group F-43m, and FIG. 3B is a diagram illustrating one of the PS₄ tetrahedrons T₁ present in the unit cell in the crystal structure in the present embodiment. In FIG. 3A, only one PS₄ tetrahedron T₂ including the P element serving as the center and the elements S'1 to S'4 serving as the four vertices corresponding to the 16e sites is drawn, but actually, there are elements S'5 to S'16 serving as the 12 vertices in the same unit cell. Similarly, in FIG. 3B, only one PS₄ tetrahedron T₁ including the P element serving as the center and the elements S1 to S4 serving as the four vertices at the 16e sites is drawn, but actually, there are elements S5 to S16 serving as the 12 vertices in the same unit cell. The elements S1 to S16 serving as the vertices and the elements S'1 to S'16 serving as the vertices correspond to each other in order.

A distance between a position of the element S'1 in FIG. 3A and a position of the element S1 in FIG. 3B corresponding to the element S'1 is Δ1. Here, positions of all the P elements in the unit cell in the space group F-43m are the same as positions of all the P elements in the unit cell of the crystal structure in the present embodiment. In FIGS. 3A and 3B, a straight line connecting the P element and the element S'1 is drawn for convenience such that the distance Δ1 can be easily understood.

Similarly, a distance between the element S'2 and the element S2 is Δ2, a distance between the element S'3 and the element S3 is Δ3, and so on up to the distance Δ16 between the element S'16 and the element S16 are determined, and an average value of the distances Δ1 to Δ16, that is, a value represented by {(Δ1 + Δ2 + ... + Δ16)/16} is the average value of the distance Δ.

Here, the respective positions of the elements S1 to S16 are obtained by performing neutron diffraction measurement on the sulfide solid electrolyte. Specifically, analysis of a crystal periodic structure is performed on the obtained neutron diffraction pattern by Rietveld analysis, and pair-distribution function (PDF) analysis is performed on the neutron scattering pattern. The Rietveld analysis is performed in the space group F-43m, and the PDF analysis is performed in a space group P1. Since the positions of the respective elements S1 to S16 are separately and independently obtained by the above analysis and the distances Δ1 to Δ16 are accurately obtained, a local structural distortion can be analyzed.

Details of the neutron diffraction measurement are described.

Conditions for the neutron diffraction measurement are as follows.

The neutron diffraction measurement can be performed by, for example, a material structure analysis device (iMATERIA) of Ibaraki Prefecture of BL20 in a Japan Proton Accelerator Research Complex (J-PARC) of a strong proton accelerator.

The sulfide solid electrolyte as a sample is packed into a vanadium cylindrical container having a diameter of 6 mm, a height of 50 mm, and a volume of approximately 1.4 cm³.

A diffractometer to be used is a neutron time-of-flight (TOF) type, and a detector to be used is a 90-degree bank (resolution Δd/d = 0.5%). A measurement range is d = 0.255 Å to 7.2 Å (DF mode), a measurement time is about 20 minutes, and the neutron diffraction pattern and the neutron scattering pattern are acquired.

Structural refinement by Rietveld analysis of the obtained neutron diffraction pattern is performed using Z-Rietveld software [see Reference Literature 1 and 2 below]. As an initial structure parameter of the sulfide solid electrolyte for the structural refinement, ICSD No. 259201 (Li_{5.4}PS_{4.4}Cl_{0.8}Br_{0.8}) registered in the Inorganic Crystal Structure Database (ICSD) is used.

The refinement of each atomic coordinate is performed according to the crystal system of cubic F-43m and space group No. 216.

In the obtained neutron scattering pattern, a structure factor S(Q) (absorption correction, polarization correction, incoherent scattering correction, atomic scattering factor) is calculated, and then G(r) is derived by Fourier transform. The pair-distribution function (PDF) analysis is performed using PDFgui software (see Reference Literature 3 below), and an analysis range r is 2.6 Å to 20.0 Å. As an initial structure of the PDF analysis, a structure obtained by the Rietveld analysis of the neutron diffraction pattern described above is used.

The refinement of each atomic coordinate in the PDF analysis is performed according to the crystal system of triclinic P1, space group No. 1, unlike the Rietveld analysis.
[Reference Literature 1] R. Oishi, M. Yonemura, Y. Nishimaki, S. Torii, A. Hoshikawa, T. Ishigaki, T. Morishima, K. Mori, T. Kamiyama, "Rietveld analysis software for J-PARC", Nucl. Instr. Meth. Phys. Res. A., 2009, 600, 94-96. doi: 10.1016/j.nima.2008.11.056
[Reference Literature 2] R. Oishi-Tomiyasu, M. Yonemura, T. Morishima, A. Hoshikawa, S. Torii, T. Ishigaki, T. Kamiyama, "Application of matrix decomposition algorithms for singular matrices to the Pawley method in Z-Rietveld", J. Appl. Cryst., 2012, 45, 299-308. doi: 10.1107/S0021889812003998
[Reference Literature 3] C. L. Farrow, P. Juhas, J. W. Liu, D. Bryndin, E. S. Bozin, J. Bloch, Th. Proffen, S. J. L. Billinge, "PDFfit2 and PDFgui: computer programs for studying nanostructure in crystals", J. Phys.: Condens. Matter., 2007, 19, 335219. doi: 10.1088/0953-8984/19/33/335219

In the sulfide solid electrolyte according to the present embodiment, the average value of the distance Δ is 0.05 Å to 0.30 Å, preferably 0.05 Å to 0.20 Å, more preferably 0.05 Å to 0.18 Å, and particularly preferably 0.07 Å to 0.18 Å. By providing a structural distortion with the average value of the distance Δ of 0.05 Å or more, the lithium ion conductivity is improved.

The reason for this is not clear, but it is considered that in the case of the PS₄ tetrahedron T₂ according to the crystal system of the space group F-43m without a structural distortion, lithium ions adjacent to the S element serving as the vertex are localized, and long-distance lithium ion conduction is difficult to perform. On the other hand, it is considered that the PS₄ tetrahedron T₁ having a structural distortion with the average value of the distance Δ of 0.05 Å or more has a disordered local structure, and lithium ions are delocalized, which promotes long-distance lithium ion conduction. That is, it is considered that lithium ions present around a specific S element serving as the vertex of the PS₄ tetrahedron T₁ are likely to move to be around another adjacent S element due to the structural distortion, and as a result, the lithium ion conductivity is improved.

From the viewpoint of improving the lithium ion conductivity, the average value of the distance Δ is 0.05 Å or more, and preferably 0.07 Å or more. When the structural distortion of the PS₄ tetrahedron T₁ is too large, the argyrodite crystal structure cannot be maintained, and thus the average value of the distance Δ is 0.30 Å or less, and from the viewpoint of the production cost associated with a necessary heat treatment temperature, the average value of the distance Δ is preferably 0.20 Å or less, and more preferably 0.18 Å or less.

Each of the values Δ1 to Δ16 on which the average value of the distance Δ is based is preferably 0.01 Å to 0.40 Å, more preferably 0.03 Å to 0.35 Å, and still more preferably 0.05 Å to 0.30 Å. Here, each of the values Δ1 to Δ16 is preferably 0.01 Å or more, more preferably 0.03 Å or more, and still more preferably 0.05 Å or more, from the viewpoint of obtaining a high lithium ion conductivity. Each of the values Δ1 to Δ16 is preferably 0.40 Å or less, more preferably 0.35 Å or less, and still more preferably 0.30 Å or less, from the viewpoint of maintaining the argyrodite crystal structure.

Among the 16 distances Δ1 to Δ16, the number of the distance Δ within the above range is preferably 12 or more, more preferably 14 or more, and still more preferably all 16.

In a part of the plurality of PS₄ tetrahedrons T₁, the P element serving as a central element may be substituted with at least one element selected from the group consisting of a Si element, an Al element, a Sn element, an In element, a Cu element, a Sb element, and a Ge element. Further, in a part of the plurality of PS₄ tetrahedrons T₁, at least a part of the S elements serving as the vertices may be substituted with at least one element selected from the group consisting of an O element and a Ha element.

Even in such a case, the above-described method can be adopted as it is for calculating the average value of the distance Δ. That is, for the PS₄ tetrahedrons T₂ in the space group F-43m used in the above calculation, the distances Δ1 to Δ16 may be calculated and analyzed while keeping the central element as the P element and the vertex elements as the S elements, without replacing the P element and the S element with the above elements, respectively. This is because the influence of the displacement of a bonding distance or a bonding angle in the tetrahedron due to the substitution of the P element or the S element by another element on the distances Δ1 to Δ16 is negligibly small.

As described above, in a part of the plurality of PS₄ tetrahedrons T₁, the P element serving as the central element may be substituted with at least one element selected from the group consisting of the Si element, the Al element, the Sn element, the In element, the Cu element, the Sb element, and the Ge element.

For example, from the viewpoint of further improving the lithium ion conductivity, the P element is preferably substituted with the Si element. A proportion at which the P element is substituted with the Si element is preferably 0.01% to 50%, and more preferably 0.1% to 40%. Here, from the viewpoint of obtaining a higher lithium ion conductivity, the substitution proportion is preferably 0.01% or more, and more preferably 0.1% or more. On the other hand, from the viewpoint of crystallinity, the proportion is preferably 50% or less, and more preferably 40% or less. The substitution proportion may be 0%, that is, the P element does not have to be substituted with the Si element. When the PS₄ tetrahedron T₁ includes the Si element, the structural distortion may increase. When the PS₄ tetrahedron T₁ includes both the O element and the Si element, the structural distortion can be further increased.

The Al element, the Sn element, the In element, the Cu element, the Sb element, and the Ge element other than the Si element may be substituted for the element P when they are contained in raw materials used in producing the sulfide solid electrolyte or when they are mixed in during the production process, regardless of whether they are intentional or not. The proportion of the element substituted for the P element is preferably 50% or less in a total proportion including the substitution with the Si element.

In the present description, the substitution proportion of the elements constituting the crystal structure is obtained by performing X-ray diffraction (XRD) measurement and performing Rietveld analysis on the obtained XRD pattern.

As described above, in a part of the plurality of PS₄ tetrahedrons T₁, at least a part of the S elements serving as the vertices may be substituted with at least one X element selected from the group consisting of an O element and a Ha element. That is, a part of the PS₄ tetrahedrons T₁ may be a P(S+X)₄ tetrahedron. Here, the X element is at least one element selected from the group consisting of an O element and a Ha element.

The P(S+X)₄ tetrahedron is a tetrahedron having a configuration such as a PSX₃ tetrahedron having one S element and three X elements, a PS₂X₂ tetrahedron having two S elements and two X elements, or a PS₃X tetrahedron having three S elements and one X element with respect to a P element as a central element. In the case of a PS₂X₂ tetrahedron or PS₁X₃ having two or more X elements, a plurality of X elements may be the same element or different elements.

The P element serving as a vertex of the P(S+X)₄ tetrahedron in which at least a part of the S elements serving as the vertex is substituted may be substituted with at least one element selected from the group consisting of the Si element, the Al element, the Sn element, the In element, the Cu element, the Sb element, and the Ge element.

In the PS₄ tetrahedron T₁, a PS₄ tetrahedron is preferred from the viewpoint of maintaining a high lithium ion conductivity, and a P(S+O)₄ tetrahedron in which at least a part of the S elements is substituted with the O element is preferred from the viewpoint of improving water resistance.

In the case where at least a part of the S elements is substituted with at least one X element selected from the group consisting of the O element and the Ha element, as an index of a ratio between the PS₄ tetrahedron T₁ and the P(S+X)₄ tetrahedron, a proportion of the X element to a total of the S element and the X element constituting the vertices of the tetrahedron is preferably 0.01% to 25%, and more preferably 0.1% to 20%. Here, the proportion is preferably 0.01% or more, and more preferably 0.1% or more, from the viewpoint of obtaining the effect of substitution. On the other hand, the proportion is preferably 25% or less, and more preferably 20% or less, from the viewpoint of maintaining a high lithium ion conductivity. This does not exclude the case where all of the tetrahedrons have the P element as the central element and all of the vertex elements are the S elements, that is, the above proportion is 0%.

In addition to the above, the S element and the X element constituting the vertices of the tetrahedron may be further partially substituted with other elements or groups. Examples of the substitutable elements or groups include Se, Te, BH₄, and CN. These elements or groups may be substitutable when they are contained in raw materials used in producing the sulfide solid electrolyte or when they are mixed in during the production process, regardless of whether they are intentional or not. Among the elements constituting the vertices of the tetrahedron, a total proportion of elements and groups other than the S element, including the X element, is preferably 50% or less, more preferably 25% or less, and still more preferably 20% or less.

The unit cell of the crystal structure of the sulfide solid electrolyte according to the present embodiment is preferably the space group P1 with axial lengths being a = b = c = 9.70 Å to 10.45 Å and axial angles being α = β = γ = 90°. This means that even when the axial lengths are a = b = c and the axial angles are α = β = γ = 90°, the PS₄ tetrahedron T₁ has low symmetry, such as no axis of symmetry or mirror plane, due to the structural distortion of the tetrahedron. The above does not exclude space groups other than the space group P1, and other space groups such as a space group Pm may be used.

The axial lengths are preferably a = b = c = 9.70 Å to 10.45 Å, more preferably 9.70 Å to 10.40 Å, still more preferably 9.75 Å to 10.30 Å, and particularly preferably 9.75 Å to 10.20 Å. Here, the axial lengths are preferably a = b = c = 9.70 Å or more, and more preferably 9.75 Å or more, from the viewpoint of maintaining a high lithium ion conductivity. From the same viewpoint, the axial lengths are preferably a = b = c = 10.45 Å or less, more preferably 10.40 Å or less, still more preferably 10.30 Å or less, and particularly preferably 10.20 Å or less.

The sulfide solid electrolyte according to the present embodiment has an argyrodite crystal structure, which is a crystal structure possessed by a group of compounds derived from a mineral represented by a composition formula Ag₈GeS₆.

The sulfide solid electrolyte according to the present embodiment contains a Ha element, besides at least a part of the S elements can be substituted with the Ha element.

The Ha element is at least one element selected from the group consisting of F, Cl, Br, and I. From the viewpoint of the lithium ion conductivity, the sulfide solid electrolyte according to the present embodiment preferably contains at least two of these elements.

The sulfide solid electrolyte according to the present embodiment more preferably contains, as the Ha element, at least one element selected from the group consisting of Cl, Br, and I, and still more preferably contains two or more elements.

The sulfide solid electrolyte according to the present embodiment further preferably contains at least one of Cl and Br, and particularly preferably contains Cl and Br, as the Ha element.

The argyrodite crystal structure of the sulfide solid electrolyte according to the present embodiment preferably has the above structure. It is preferable that the composition formula is represented by LiₐPS_{b}Ha_{c}, and relationships of 5 ≤ a ≤ 7, 4 ≤ b ≤ 6, and 1.3 ≤ c ≤ 2 are satisfied. Such element ratios more preferably satisfy relationships of 5.1 < a < 6.3, 4 < b < 5.3, and 1.4 ≤ c ≤ 1.9, and still more preferably satisfy relationships of 5.2 < a < 6.2, 4.1 < b < 5.2, and 1.5 ≤ c ≤ 1.8.

That is, the a is preferably 5 or more, more preferably more than 5.1, and still more preferably more than 5.2, and is preferably 7 or less, more preferably less than 6.3, and still more preferably less than 6.2. The b is preferably 4 or more, more preferably more than 4, and still more preferably more than 4.1, and is preferably 6 or less, more preferably less than 5.3, and still more preferably less than 5.2. The c is preferably 1.3 or more, more preferably 1.4 or more, and still more preferably 1.5 or more, and is preferably 2 or less, more preferably 1.9 or less, and still more preferably 1.8 or less.

Here, when a part of the P elements is substituted with other elements, the total of the P elements and the other elements is taken as 1, and it is preferable that the a, b, and c are respectively within the above ranges. When a part of the S elements is substituted with the O element, it is preferable that the total of the S element and the O element is within the range of the b.

A secondary particle size of the sulfide solid electrolyte according to the present embodiment is preferably small from the viewpoint of obtaining a good lithium ion conductivity when used in a lithium ion secondary battery. Specifically, the secondary particle size is preferably 10 µm or less, more preferably 3 µm or less, and still more preferably 1 µm or less. The lower limit of the secondary particle size is not particularly limited, and is generally 0.1 µm or more.

The secondary particle size can be measured using a Microtrac device.

A lithium ion conductivity of the sulfide solid electrolyte according to the present embodiment at 25°C is preferably 3.0×10⁻³ S/cm or more, more preferably 3.5×10⁻³ S/cm or more, and still more preferably 4.0×10⁻³ S/cm or more. The higher the conductivity, the more preferable. The upper limit of the lithium ion conductivity is not particularly limited, and is generally 1×10⁻¹ S/cm or less.

The lithium ion conductivity can be measured by an AC impedance method.

The solid electrolyte according to the present embodiment is suitably used for an electrode mixture or a solid electrolyte layer used in a lithium ion secondary battery, and is particularly suitable for an all-solid-state lithium ion secondary battery.

That is, an electrode mixture according to the present embodiment is used in a lithium ion secondary battery, and contains the above-described solid electrolyte and an active material.

A solid electrolyte layer according to the present embodiment is used in a lithium ion secondary battery, and contains the above-described solid electrolyte.

An all-solid-state lithium ion secondary battery according to the present embodiment contains the above-described solid electrolyte.

The electrode mixture, the solid electrolyte layer, and the all-solid-state lithium ion secondary battery may further contain another solid electrolyte. The other solid electrolyte is not particularly limited, and examples thereof include a solid electrolyte having an argyrodite crystal structure that is known in related art, Li₃PS₄, Li₄P₂S₆, Li₂S, and LiHa.

As the active material contained in the electrode mixture, an active material known in related art can be used.

For example, a positive electrode active material is not particularly limited as long as it can reversibly absorb and release lithium ions, desorb and insert (intercalate) lithium ions, or dope and dedope counter anions of the lithium ions. Specific examples thereof include lithium cobalt oxide, lithium nickel oxide, lithium manganese oxide, lithium nickel manganese oxide, composite metal oxides, and polyaniline olivine positive electrodes.

A negative electrode active material is not particularly limited as long as it can reversibly absorb and release lithium ions, desorb and insert (intercalate) lithium ions, or dope and dedope counter anions of the lithium ions. Examples of the negative electrode active material include metal lithium, carbon-based materials such as graphite, hard carbon, and soft carbon, metals capable of forming an alloy with lithium such as aluminum, silicon, and tin, amorphous oxides such as silicon oxide and tin oxide, and lithium titanate.

The solid electrolyte layer contains the solid electrolyte according to the present embodiment, and may further contain an additive such as a binder.

As the binder, materials known in related art can be used, and examples thereof include butadiene rubber, acrylate butadiene rubber, styrene butadiene rubber, polyvinylidene fluoride, and polytetrafluoroethylene. A content of the binder in the solid electrolyte layer may also be within a range known in related art.

The all-solid-state lithium ion secondary battery is not particularly limited as long as it contains the solid electrolyte according to the present embodiment, a positive electrode, and a negative electrode. The positive electrode or the negative electrode may be an electrode mixture containing the solid electrolyte according to the present embodiment.

An active material of the positive electrode may be the same as the positive electrode active material described in the electrode mixture, and the positive electrode may further contain a positive electrode current collector, a binder, a conductive auxiliary agent, and the like as necessary. As the positive electrode current collector, a metal thin plate such as aluminum, an alloy thereof, stainless steel, or the like can be used.

An active material of the negative electrode may be the same as the negative electrode active material described in the electrode mixture, and the negative electrode may further contain a negative electrode current collector, a binder, a conductive auxiliary agent, and the like as necessary. As the negative electrode current collector, a metal thin plate such as copper or aluminum can be used.

### <Method for Producing Sulfide Solid Electrolyte>

A method for producing a sulfide solid electrolyte according to the present embodiment is not particularly limited as long as the crystal structure described in the <Sulfide Solid Electrolyte> is obtained.

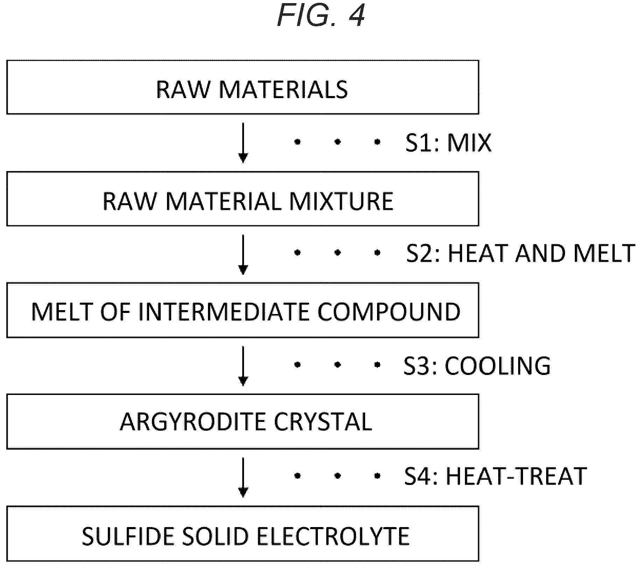

As one embodiment, for example, as illustrated in FIG. 4, the following steps S1 to S4 are sequentially included.

Step S1 is a step of mixing raw materials containing a Li element, a P element, a S element, and a Ha element to obtain a raw material mixture.

Step S2 is a step of heating the raw material mixture obtained in step S1 at a temperature of 760°C or higher to obtain a melt of a completely dissolved intermediate compound.

Step S3 is a step of cooling the melt obtained in step S2 to precipitate an argyrodite crystal.

Step S4 is a step of heat-treating the precipitated crystal obtained in step S3 at 350°C to 500°C.

Each step is described.

In step S1 of the step of mixing raw materials containing a Li element, a P element, a S element, and a Ha element to obtain a raw material mixture, raw materials containing the P element and the S element constituting a PS₄ tetrahedron T₁ and the respective elements of the Li element and the Ha element are used. When a part of the P elements or the S elements is substituted with another element as described above, it is preferable to include another element as the raw materials. Specifically, the raw materials may further contain at least one element selected from the group consisting of a Si element, an Al element, a Sn element, an In element, a Cu element, a Sb element, a Ge element, and an O element.

As the raw materials containing the Li element, the P element, the S element, and the Ha element, and optionally other elements, raw materials known in the related art can be used.

Specifically, Li simple substance or a compound containing Li, P simple substance or a compound containing P, S simple substance or a compound containing S, and a compound containing Ha can be appropriately combined and used. When the O element is further contained, an oxide may be used as the compound. These compounds may be a compound containing two or more of Li, P, S, and Ha. For example, phosphorus pentasulfide (P₂S₅) may be used as a compound serving as both the compound containing S and the compound containing P. Lithium halide may be used as a compound serving as both the compound containing Li and the compound containing Ha.

Examples of the compound containing Li include lithium compounds such as lithium sulfide (Li₂S), lithium carbonate (Li₂CO₃), lithium sulfate (Li₂SO₄), lithium oxide (Li₂O), and lithium hydroxide (LiOH). From the viewpoint of ease of handling, lithium sulfide is preferred.

On the other hand, since lithium sulfide is expensive, it is preferable to use a lithium compound other than lithium sulfide, metallic lithium, or the like, from the viewpoint of reducing the production cost. Specifically, it is preferable to use one or more selected from the group consisting of metallic lithium, lithium carbonate (Li₂CO₃), lithium sulfate (Li₂SO₄), lithium oxide (Li₂O), and lithium hydroxide (LiOH). These may be used alone or in combination of two or more kinds thereof.

Examples of the compound containing S include phosphorus sulfides such as phosphorus trisulfide (P₂S₃) and phosphorus pentasulfide (P₂S₅), other sulfur compounds containing phosphorus, elemental sulfur, and a compound containing sulfur. Examples of the compound containing sulfur include H₂S, CS₂, iron sulfides (FeS, Fe₂S₃, FeS₂, Fe₁₋ₓS, or the like), bismuth sulfide (Bi₂S₃), and copper sulfides (CuS, Cu₂S, Cu₁₋ₓS, or the like). Among them, phosphorus sulfides are preferred, and phosphorus pentasulfide (P₂S₅) is more preferred, from the viewpoint of preventing the inclusion of elements other than the elements constituting the target sulfide solid electrolyte. These may be used alone or in combination of two or more kinds thereof. Phosphorus sulfide is a compound serving as both the compound containing S and the compound containing P.

Examples of the compound containing P include phosphorus sulfides such as phosphorus trisulfide (P₂S₃) and phosphorus pentasulfide (P₂S₅), and phosphorus compounds such as sodium phosphate (Na₃PO₄). Among them, phosphorus sulfides are preferred, and phosphorus pentasulfide (P₂S₅) is more preferred, from the viewpoint of preventing the inclusion of elements other than the elements constituting the target sulfide solid electrolyte. These may be used alone or in combination of two or more kinds thereof.

Examples of the compound containing Ha include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. Among them, lithium halides are preferred, and LiCl, LiBr, and LiI are more preferred, from the viewpoint of preventing the inclusion of elements other than the elements constituting the target sulfide solid electrolyte. These compounds may be used alone or in combination of two or more kinds thereof.

Examples of the raw material containing the Si element as an optional component include SiO₂ and SiS₂. Among them, SiO₂ is more preferred from the viewpoint of lithium ion conductivity. These compounds may be used alone or in combination of two or more kinds thereof.

Examples of the raw material containing the Al element as an optional component include Al₂S₃, Al₂O₃, and AlCl₃. Among them, Al₂S₃ and AlCl₃ are preferred, and Al₂S₃ is more preferred, from the viewpoint of the lithium ion conductivity. These compounds may be used alone or in combination of two or more kinds thereof.

Examples of the raw material containing the Sn element as an optional component include SnS, SnS₂, SnO, SnO₂, and SnCl₂. Among them, from the viewpoint of lithium ion conductivity, SnS₂ and SnCl₂ are preferred, and SnS₂ is more preferred. These compounds may be used alone or in combination of two or more kinds thereof.

Examples of the raw material containing the In element as an optional component include In₂O₃, In₂S₃, and InCl₃. Among them, from the viewpoint of the lithium ion conductivity, In₂S₃, and InCl₃ are preferred, and In₂S₃ is more preferred. These compounds may be used alone or in combination of two or more kinds thereof.

Examples of the raw material containing the Cu element as an optional component include Cu₂O, CuO, Cu₂S, CuS, and CuCl₂. Among them, from the viewpoint of the lithium ion conductivity, CuS and CuCl₂ are preferred, and CuS is more preferred. These compounds may be used alone or in combination of two or more kinds thereof.

Examples of the raw material containing the Sb element as an optional component include Sb₂O₃, Sb₂S₃, and SbCl₃. Among them, from the viewpoint of lithium ion conductivity, Sb₂S₃ and SbCl₃ are preferred, and Sb₂S₃ is more preferred. These compounds may be used alone or in combination of two or more kinds thereof.

Examples of the raw material containing the Ge element as an optional component include GeO₂, GeS, GeS₂, and GeCl₂. Among them, from the viewpoint of the lithium ion conductivity, Ge S₂ and GeCl₂ are preferred, and GeS₂ is more preferred. These compounds may be used alone or in combination of two or more kinds thereof.

The raw materials can be mixed by, for example, mixing in a mortar, mixing using a medium such as a planetary ball mill, and medium-less mixing such as a pin mill, a powder stirrer, and air flow mixing. The raw materials may be made amorphous by mixing before heating.

In subsequent step S2, the raw material mixture obtained in step S1 is heated at 760°C or higher to obtain a melt of a completely dissolved intermediate compound.

A specific method of heating and melting the raw material mixture is not particularly limited, and the raw material mixture is charged into in a heat-resistant container and heated in a heating furnace. A mixture of the raw materials may be sealed in a heat-resistant container. Melting may be performed in an atmosphere containing a sulfur element or the like. Examples of the sulfur element-containing atmosphere include a mixed gas atmosphere of an inert gas and a sulfur element-containing gas such as a sulfur gas, a hydrogen sulfide gas, or a sulfur dioxide gas.

As the heat-resistant container, a heat-resistant container made of carbon, a heat-resistant container containing an oxide such as quartz, a quartz glass, a borosilicate glass, an aluminosilicate glass, alumina, zirconia, and mullite, a heat-resistant container containing a nitride such as silicon nitride and boron nitride, and a heat-resistant container containing a carbide such as silicon carbide may be used. These heat-resistant containers may have a bulk formed of the above-described material, or may be a container having a layer of carbon, an oxide, a nitride, a carbide, or the like, such as a carbon-coated quartz tube.

A heating temperature when the raw material mixture is heated and melted is 760°C or higher, preferably 760°C to 1300°C, more preferably 780°C to 1200°C, and still more preferably 800°C to 1000°C. By setting the heating temperature to 760°C or higher, a structural distortion is easily introduced into the PS₄ tetrahedron T₁ in the obtained sulfide solid electrolyte.

It is considered that when the melt of the intermediate compound in which the raw material mixture is completely dissolved is obtained, an atomic arrangement becomes more disordered, and the environment around the PS₄ tetrahedron T₁ becomes non-equivalent, resulting in introduction of the structural distortion. The introduction of the structural distortion can be increased by using the raw material containing the Si element in the raw material mixture, and can be further increased by using both the raw material containing the Si element and the raw material containing the O element.

From the above viewpoint, the heating temperature is 760°C or higher, more preferably 780°C or higher, and still more preferably 800°C or higher. The heating temperature is preferably 1300°C or lower, more preferably 1200°C or lower, and still more preferably 1000°C or lower, from the viewpoint of preventing deterioration or decomposition of the component in the molten solution due to heating.

A time for the heating and melting is preferably 10 minutes to 10 hours, more preferably 30 minutes to 9.5 hours, still more preferably 45 minutes to 9 hours, and particularly preferably 1 hour to 9 hours. Here, the time for the heating and melting is preferably 10 minutes or more, more preferably 30 minutes or more, still more preferably 45 minutes or more, and particularly preferably 1 hour or more, from the viewpoint of allowing the reaction to proceed smoothly. The time for the heating and melting is preferably 10 hours or less, more preferably 9.5 hours or less, and still more preferably 9 hours or less, from the viewpoint of preventing deterioration or decomposition of the component in the molten solution due to heating.

An atmosphere for the heating and melting is preferably an inert atmosphere. Examples of the inert atmosphere include a nitrogen gas atmosphere, an argon gas atmosphere, and a helium gas atmosphere.

A dew point during the heating and melting is preferably -20°C or lower, and the lower limit thereof is not particularly limited, and is generally about -80°C. An oxygen concentration is preferably 1000 ppm or less.

In step S2, whether the intermediate compound is completely dissolved can be confirmed by the absence of a peak derived from a crystal in high-temperature X-ray diffraction measurement.

In subsequent step S3, the melt of the completely dissolved intermediate compound in step S2 is cooled to precipitate an argyrodite crystal.

A cooling rate is preferably 0.1°C/sec to 10000°C/sec, more preferably 0.5°C/sec to 5000°C/sec, and still more preferably 1 °C/sec to 1000°C/sec. The cooling rate is preferably 0.1°C/sec or more, more preferably 0.5°C/sec or more, and still more preferably 1°C/sec or more, from the viewpoint of increasing composition homogeneity and preventing variation in quality. The upper limit value of the cooling rate is not particularly limited, and the upper limit value is 1000000°C/sec or less in consideration of the cooling rate of a twin roller, which is generally said to have the highest rapid cooling rate, and from the viewpoint of actual production, the cooling rate is more preferably 10000°C/sec or less, still more preferably 5000°C/sec or less, and even more preferably 1000°C/sec.

An atmosphere during the cooling is preferably an inert atmosphere with a low moisture content, similar to that in the heating and melting in step S2.

In step S4, the argyrodite crystal precipitated in step S3 is heat-treated at 350°C to 500°C. Accordingly, the sulfide solid electrolyte according to the present embodiment is obtained.

A temperature during the heat-treating is 350°C to 500°C, preferably 355°C to 490°C, and more preferably 360°C to 480°C. Here, in the PS₄ tetrahedron T₁ in the sulfide solid electrolyte, the temperature during the heat-treating is 350°C or higher, preferably 355°C or higher, and more preferably 360°C or higher, from the viewpoint of facilitating the introduction of structural distortion. The temperature during the heat-treating is 500°C or lower, preferably 490°C or lower, and more preferably 480°C or lower, from the viewpoint of preventing sintering of particles.

A time for the heat-treating is preferably 10 minutes to 10 hours, more preferably 30 minutes to 9.5 hours, still more preferably 45 minutes to 9 hours, and particularly preferably 1 hour to 9 hours. Here, the time for the heat-treating is preferably 10 minutes or more, more preferably 30 minutes or more, still more preferably 45 minutes or more, and particularly preferably 1 hour or more, from the viewpoint of facilitating the introduction of structural distortion. The time for the heating and melting is preferably 10 hours or less, more preferably 9.5 hours or less, and still more preferably 9 hours or less, from the viewpoint of the production cost.

The atmosphere during the heat-treating is preferably an inert atmosphere. Examples of the inert atmosphere include a nitrogen gas atmosphere, an argon gas atmosphere, and a helium gas atmosphere.

A dew point during the heat-treating is preferably -20°C or lower, and a lower limit thereof is not particularly limited, and is generally about -80°C. An oxygen concentration is preferably 1000 ppm or less.

The sulfide solid electrolyte obtained in step S4 is subjected to a step known in related art together with other components as necessary when used in an electrode mixture or solid electrolyte layer for a lithium ion secondary battery, or an all-solid-state lithium ion secondary battery.

### EXAMPLES

Hereinafter, the present invention is described in detail with reference to Examples, but the present invention is not limited thereto.

Examples 1 and 2 are Inventive Examples, and Example 3 is a Comparative Example.

### [Example 1]

Under a dry nitrogen gas atmosphere, a lithium sulfide powder (manufactured by Sigma, purity 99.98%), a phosphorus pentasulfide powder (manufactured by Sigma, purity 99%), a lithium chloride powder (manufactured by Sigma, purity 99.99%), and a lithium bromide powder (manufactured by Sigma, purity 99.995%) were weighed out so as to have a composition ratio of Li_{5.4}PS_{4.4}Cl_{0.8}Br_{0.8}, and mixed in a mortar. Then, a SiO₂ powder (manufactured by AS ONE Corporation, quartz test tube SJT series was pulverized and used) was mixed, and the obtained mixture was charged into a carbon-coated quartz tube and subjected to vacuum sealing. Thereafter, the mixture was heated in an electric furnace at 850°C for 1 hour to obtain a melt of a completely melted intermediate compound. Next, the melt was cooled to room temperature at 10°C/sec to precipitate an argyrodite crystal. Thereafter, the argyrodite crystal was heat-treated at 400°C for 1 hour in a dry nitrogen gas atmosphere, and then cooled to room temperature again at 1°C/sec to obtain a sulfide solid electrolyte.

### [Example 2]

A sulfide solid electrolyte was obtained in the same manner as in Example 1 except that a heat treatment temperature after an argyrodite crystal was precipitated was changed to 415°C as shown in Table 1.

### [Example 3]

A sulfide solid electrolyte was obtained in the same manner as in Example 1 except that a heat treatment temperature after an argyrodite crystal was precipitated was changed to 320°C as shown in Table 1.

### [Evaluation: Neutron Diffraction Measurement]

The sulfide solid electrolytes obtained in Examples 1 to 3 were subjected to neutron diffraction measurement.

The neutron diffraction measurement was performed by a material structure analysis device (iMATERIA) of Ibaraki Prefecture of BL20 in a Japan Proton Accelerator Research Complex (J-PARC) of a strong proton accelerator.

The sulfide solid electrolyte as a sample was packed into a vanadium cylindrical container having a diameter of 6 mm, a height of 50 mm, and a volume of approximately 1.4 cm³.

A diffractometer to be used was a neutron time-of-flight (TOF) type, and a detector to be used is a 90-degree bank (resolution Δd/d = 0.5%).

A measurement range was d = 0.255 Å to 7.2 Å (DF mode), a measurement time was about 20 minutes, and a neutron diffraction pattern and a neutron scattering pattern were acquired.

Structural refinement by Rietveld analysis of the obtained neutron diffraction pattern was performed using Z-Rietveld software. As an initial structure parameter of the sulfide solid electrolyte for the structural refinement, ICSD No. 259201 (Li_{5.4}PS_{4.4}Cl_{0.8}Br_{0.8}) registered in the Inorganic Crystal Structure Database (ICSD) was used.

The refinement of each atomic coordinate was performed according to the crystal system of cubic F-43m and space group No. 216.

In the obtained neutron scattering pattern, a structure factor S(Q) (absorption correction, polarization correction, incoherent scattering correction, atomic scattering factor) was calculated, and then G(r) was derived by Fourier transform. The pair-distribution function (PDF) analysis was performed using PDFgui software, and an analysis range r was 2.6 Å to 20.0 Å. An initial structure of the PDF analysis was a structure obtained by the Rietveld analysis described above.

The refinement of each atomic coordinate in the PDF analysis was performed according to the crystal system of triclinic P1, space group No. 1, unlike Rietveld analysis.

A specific composition and a content proportion of the sulfide solid electrolyte having an argyrodite crystal structure were identified from the results of the PDF analysis.

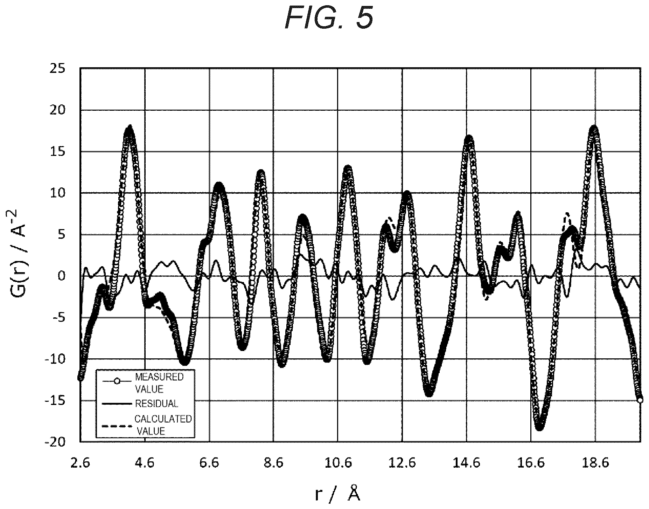

As an example, FIG. 5 illustrates a graph illustrating results of the PDF analysis of the sulfide solid electrolyte in Example 1. In FIG. 5, a circle represents a measured value, a broken line represents a calculated value, and a solid line represents a residual indicating a difference therebetween. Specific compositions and content proportions of the sulfide solid electrolytes in Examples 1 to 3 were shown in Table 1 under "Composition". A space group, an axis length, and an axis angle of the argyrodite crystal structure were also shown in Table 1 under "Space group", "Axis lengths a = b = c", and "Axial angles α = β = γ" in "Argyrodite crystal structure", respectively.

As illustrated in FIG. 5, the results of the PDF analysis indicate that the residual is small and the PDF analysis is accurate with respect to the measured value. A Rwp value was one of indexes indicating the accuracy of such PDF analysis, and the Rwp values in Examples were 0.161 in Example 1, 0.158 in Example 2, and 0.147 in Example 3, which are sufficiently low values in all Examples.

A composition of a sulfide solid electrolyte actually obtained was Li_{5.30}P_{0.95}Si_{0.05}S_{4.23}O_{0.10}Cl_{0.80}Br_{0.80}, whereas a charged composition was Li_{5.4}PS_{4.4}Cl_{0.8}Br_{0.8}. That is, in a part of the PS₄ tetrahedrons T₁, the P element is substituted with a Si element, and at least a part of the S elements is substituted with an O element. The Si element and the O element are derived from the SiO₂ powder added as a raw material, and it is considered that when the melt of the intermediate compound completely dissolved by heating is obtained, a part of SiO₂ is also melted together and incorporated into the crystal structure.

Among atomic coordinates obtained by the PDF analysis, 16 S elements in a unit cell were assigned symbols S1 to S16. The 16 S elements corresponding to 16e sites in the unit cell in the crystal system of cubic F-43m and space group No. 216 were also assigned symbols S'1 to S'16 so as to correspond to the above S1 to S16. Then, the distance Δ1 between S1 and S'1 was obtained, and Δ2 to Δ16 were similarly obtained for S2 to S16 and S'2 to S'16, respectively. Then, a value represented by {(Δ1 + Δ2 +... + Δ16)/16} was obtained as the average value of the distance Δ. The results are shown in Table 1 under "Δave." in the "Argyrodite crystal structure" column.

### (Evaluation: Lithium Ion Conductivity)

The obtained sulfide solid electrolyte powder was formed into a powder body under a pressure of 380 kN, the powder body was used as a measurement sample, and the lithium ion conductivity thereof was measured using an AC impedance measuring device (potentiostat/galvanostat VSP, manufactured by Bio-Logic Sciences Instruments). The measurement conditions were as follows: a measurement frequency of 100 Hz to 1 MHz, a measurement voltage of 100 mV, and a measurement temperature of 25°C. The results were shown in Table 1 under "σ_{Li+} (mS/cm)".

**[Table 1]**

| | Composition | Heat treatment temperature | Argyrodite crystal structure | | | | σ_{Li+} (mS/cm) |
|---|---|---|---|---|---|---|---|
| | | | Space group | Axial lengths a=b=c | Axial angles α=β=γ | Δave. | |
| Example 1 | Li_{5.30}P_{0.95}Si_{0.05}S_{4.23}O_{0.10}Cl_{0.80}Br_{0.80} | 400°C | P1 | 9.905 Å | 90° | 0.116 Å | 7.0 |
| Example 2 | Li_{5.30}P_{0.95}Si_{0.05}S_{4.23}O_{0.10}Cl_{0.80}Br_{0.80} | 415°C | P1 | 9.904 Å | 90° | 0.144 Å | 7.9 |
| Example 3 | Li_{5.30}P_{0.95}Si_{0.05}S_{4.23}O_{0.10}Cl_{0.80}Br_{0.80} | 320°C | P1 | 9.902 Å | 90° | 0.021 Å | 3.1 |

From the above results, it can be seen that the sulfide solid electrolytes in Examples 1 and 2 have a PS₄ tetrahedron T₁ in which a structural distortion is introduced with the average value of the distance Δ in a range of 0.05 Å to 0.30 Å, compared to a PS₄ tetrahedron in an argyrodite crystal structure belonging to the space group F-43m that is known in related art. Such a structural distortion was obtained by heating the raw material mixture at a temperature of 760°C or higher to obtain the melt of the completely dissolved intermediate compound, and heat-treating an argyrodite crystal precipitated by cooling the melt at 350°C to 500°C in the production method.

The lithium ion conductivities of the sulfide solid electrolytes according to Example 1 and Example 2 were 7.0 mS/cm and 7.9 mS/cm in order, demonstrating a very excellent lithium ion conductivity compared to the lithium ion conductivity of 3.1 mS/cm of the sulfide solid electrolyte according to Example 3 in which the average value of the distance Δ was 0.021 Å, which can be regarded as being equivalent to that without a structural distortion.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2022-169459) filed on October 21, 2022, the content of which is incorporated herein by reference.

## Claims

1. A sulfide solid electrolyte comprising:
a Li element;
a P element;
a S element; and
a Ha element,
wherein the sulfide solid electrolyte comprises an argyrodite crystal structure,
the Ha element is at least one element selected from the group consisting of F, Cl, Br, and I,
the crystal structure comprises a plurality of PS₄ tetrahedrons T₁ with the P element at a center and four S elements at vertices,
in a part of the PS₄ tetrahedrons T₁, the P element may be substituted with at least one element selected from the group consisting of a Si element, an Al element, a Sn element, an In element, a Cu element, a Sb element, and a Ge element,
in a part of the PS₄ tetrahedrons T₁, at least a part of the S elements may be substituted with at least one element selected from the group consisting of an O element and the Ha element,
the crystal structure comprises 16 elements serving as the vertices of the PS₄ tetrahedrons T₁ in a unit cell, and
when the 16 elements are made to correspond to 16 S elements constituting vertices corresponding to 16e sites of PS₄ tetrahedrons T₂ in a space group F-43m, an average value of a distance Δ between respective positions of the 16 elements in the PS₄ tetrahedrons T₁ and respective positions of the 16 S elements in the PS₄ tetrahedrons T₂ corresponding thereto is 0.05 Å to 0.30 Å.

2. The sulfide solid electrolyte according to claim 1,
wherein in the part of the PS₄ tetrahedrons T₁, the P element is substituted with the Si element.

3. The sulfide solid electrolyte according to claim 1,
wherein in the part of the PS₄ tetrahedrons T₁, the at least a part of the S elements is substituted with the O element.

4. The sulfide solid electrolyte according to claim 1, comprising at least two elements selected from the group consisting of F, Cl, Br and I as the Ha element.

5. The sulfide solid electrolyte according to claim 1,
wherein the average value of the distance Δ is 0.05 Å to 0.20 Å.

6. The sulfide solid electrolyte according to claim 1,
wherein the unit cell is a space group P1 with axial lengths being a = b = c = 9.70Å to 10.45 Å and axial angles being α = β = γ = 90°.

7. An electrode mixture to be used in a lithium ion secondary battery, the electrode mixture comprising: the sulfide solid electrolyte according to any one of claims 1 to 6; and an active material.

8. A solid electrolyte layer to be used in a lithium ion secondary battery, the solid electrolyte layer comprising the sulfide solid electrolyte according to any one of claims 1 to 6.

9. An all-solid-state lithium ion secondary battery comprising the sulfide solid electrolyte according to any one of claims 1 to 6.

10. A method for producing a sulfide solid electrolyte, the method comprising:
mixing raw materials comprising a Li element, a P element, a S element, and a Ha element to obtain a raw material mixture;
heating the raw material mixture at a temperature of 760°C or higher to obtain a melt of a completely dissolved intermediate compound;
cooling the melt to precipitate an argyrodite crystal; and
heat-treating the precipitated crystal at 350°C to 500°C,
wherein the Ha element is at least one element selected from the group consisting of F, Cl, Br, and I, and
the sulfide solid electrolyte comprises an argyrodite crystal structure.

11. The method for producing a sulfide solid electrolyte according to claim 10,
wherein the raw materials further comprise at least one element selected from the group consisting of a Si element, an Al element, a Sn element, an In element, a Cu element, a Sb element, a Ge element, and an O element.

12. The method for producing a sulfide solid electrolyte according to claim 10 or 11,
wherein the heating at the temperature of 760°C or higher is performed under a condition of 10 minutes to 10 hours in an inert atmosphere.

13. The method for producing a sulfide solid electrolyte according to claim 10 or 11,
wherein the heat-treating is performed for 10 minutes to 10 hours in an inert atmosphere.
